# EUROPEAN PATENT APPLICATION

(11) **EP 0 642 998 A2**
(43) Date of publication of application: **15.03.1995**
(21) Application number: 94113902.4
(22) Date of filing: 05.09.1994
(51) Int. Cl.: B65G 49/06, C03B 33/03

(54) **A unit for the production of flat glass products**

(30) Priority: 10.09.1993 IT TO930664
(71) Applicant: BOTTERO S.p.A., I-12010 Roata Canale (Cuneo) (IT)
(72) Inventor: Aimar, Giacomo, I-12010 Cervasca (IT); Bertolino, Valerio, I-12040 Morozzo (IT)
(74) Representative: Jorio, Paolo

(57) **Abstract**

A unit (1) for the production of flat glass products, in which a bench (13) for supporting at least one glass sheet (2) is carried by a motor-driven carriage (7) which is movable towards and away from a station (3) from which the sheets (2) are picked up; the bench (13) carrying a pick-up head (18) for picking up and moving the sheets (2) and an assembly (34, 38) for scoring and snapping off the sheets (2), being hinged to the carriage (7) to rock between a raised, loading position, in which it can receive the sheets (2) in succession from the pick-up head (18) and a lowered, operative position in which it supports the sheets (2) during the scoring and snapping of the sheets (2).

## Description

The present invention relates to a unit for the production of flat glass products.

Normally flat glass products are made from glass sheets on production lines which include a store for housing a plurality of sheets; a scoring station at which each sheet is scored with a plurality of lines; and a breaking, or snapping, station at which each sheet is snapped along the score lines to produce a plurality of flat products.

In known production lines of the type described above, the taking of the sheets from the store and the successive transfer of the sheets to the scoring station above a rocking support bench are usually carried out by means of a pick-up head, generally of a suction-cup type. which, in most applications, is moved by a bridge overlying the production line or alternatively by a loading carriage moved automatically or by an operator.

Known production lines of the type described above, even though they are used since they are efficient and reliable from a functional point of view, suffer from the disadvantage of being very bulky and expensive to produce and assemble as well as to maintain.

The object of the present invention is to provide a unit for the production of flat glass products which solves the problems relating to known production lines in a simple and economic manner.

According to the present invention there is provided a unit for the production of flat glass products, the unit including a support frame; a bench for supporting at least one glass sheet, the bench being pivotally connected to the frame for pivoting relative to the frame itself about an axis; and actuator means interposed between the frame and the bench for rocking the bench about the said axis; and being characterised in that it further includes a first carriage for supporting the frame, first drive means for moving the first carriage towards and away from a station at which the glass sheet is picked up and moving and pick-up means carried by the bench for coupling positively with the sheet to take the sheet from the pick-up station and to deposit the sheet on the bench.

In the unit defined above, the bench is preferably connected to the frame for pivoting about the said axis between a lowered, operative position in which the bench is located in a substantially horizontal position, and a raised, loading position in which the bench is pivoted from its operative position through an angle greater than 90° into a position into which it is substantially parallel to the glass sheet.

The invention will now be described with reference to the appended drawings, which illustrate one non-limitative embodiment, in which:
Figure 1 is a side elevational view of a preferred embodiment of the unit of the present invention;
Figures 2, 3, 4 and 5 illustrate the unit of Figure 1 in four different operative positions with parts removed for clarity;
Figure 6 is a view taken on the arrow A of Figure 1 but on a reduced scale;
Figure 7 is a view similar to Figure 6 showing a variant of the unit of Figure 1;
Figure 8 is a sectional view of a detail of Figure 1 on an enlarged scale;
Figure 9 is a plan view of a further variant of the unit of Figure 1; and
Figure 10 is a sectional view taken on the line X-X of Figure 9.

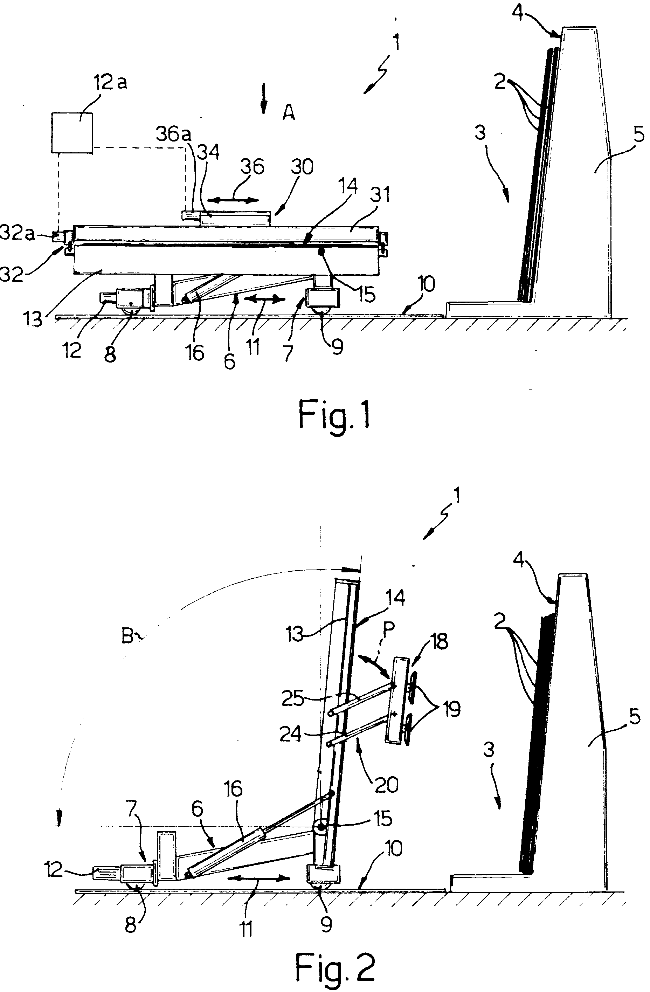

In Figures 1 to 6, reference 1 generally indicates a unit for the production of flat glass products from respective sheets 2 located at a pick-up station 3 in which they are arranged on edge against an inclined support surface 4 defined by a support 5.

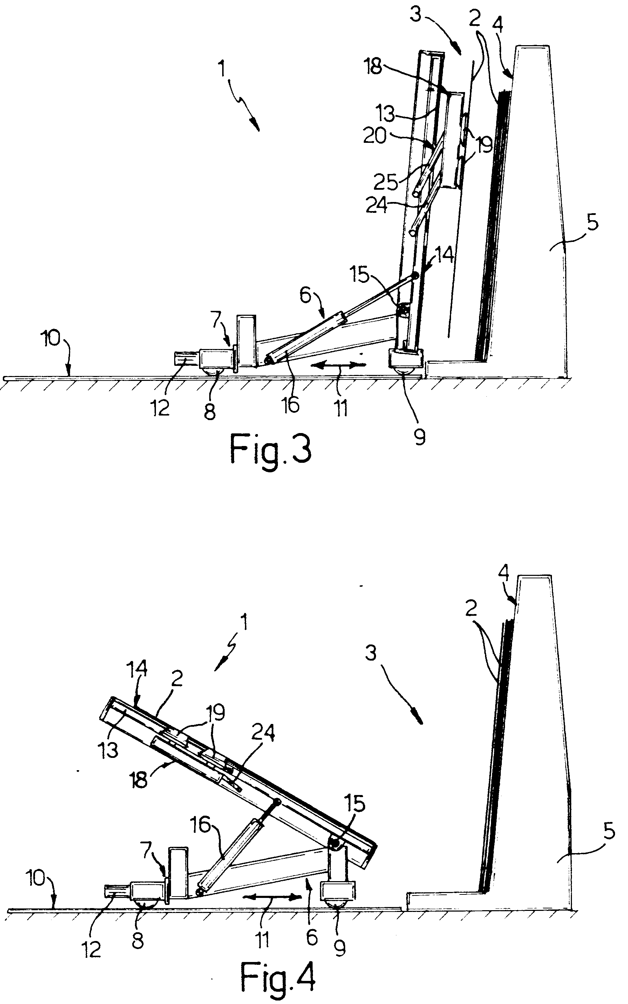

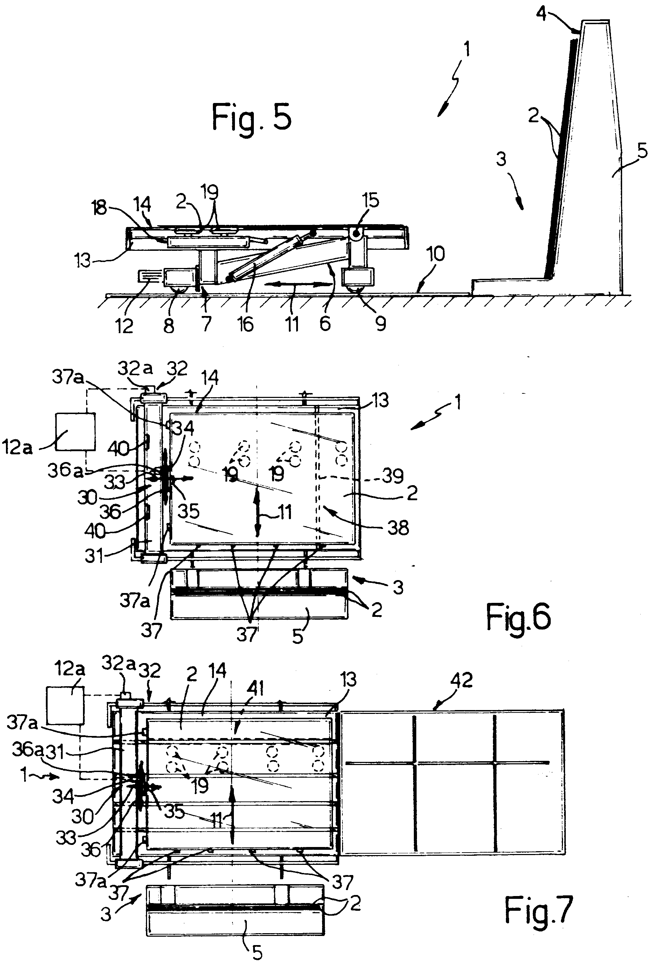

The unit 1 includes a frame 6 and a carriage 7 which supports the frame 6 and has two pairs of rotatable wheels 8 and 9 which can run on a guide 10 extending along a line of movement 11. The carriage 7 is movable by a pair of motors 12 which are coupled to the wheels 8 and controlled by a programmable central control unit 12a of known type to move the carriage 7 towards and away from the station 3 between an advanced position, illustrated in Figure 3, in which the frame 6 is close to the station 3, and a withdrawn reference position illustrated in Figures 1 and 5.

The unit 1 further includes a bench 13 which defines a support plane 14 for a sheet 2 and is pivotally connected at a position close to its end nearer to the station 3 to an upper part of the frame 6 by a pair of pins 15 (only one of which is visible in Figure 1) extending parallel to the support plane 14. The bench 13 is pivotable relative to the frame 6 about the axis of the pins 15 by means of a pair of hydraulic actuators 16 (only one of which is visible in Figure 1) connected in an hydraulic circuit of known type, not illustrated, and controlled by the central control unit 12a to pivot the bench 13 between a lowered, operative position, illustrated in Figures 1, 5, and 6, in which the bench 13, and hence the plane 14, are substantially horizontal, and a raised, loading position illustrated in Figures 2 and 3, in which the bench 13 is pivoted from its lowered, operative position through an angle B greater than 90° and the support plane 14 is substantially parallel to the sheets 2 and the surface 4.

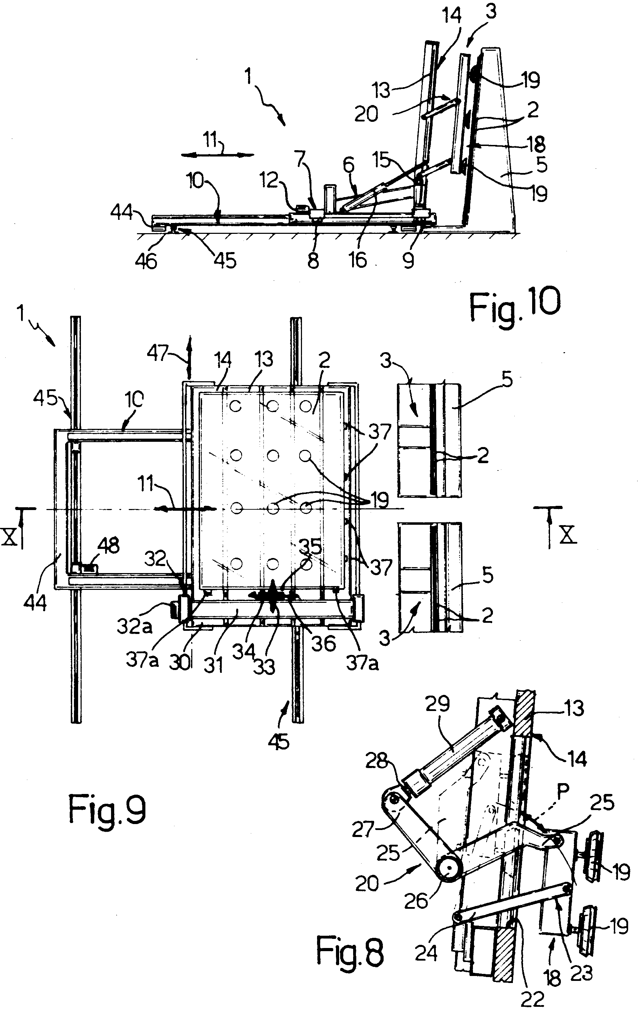

Still with reference to Figures 1 to 6 but, in particular, to Figure 8, the bench 13 has an associated pick-up head 18 which is arranged to take the sheets 2 in succession from the station 3 and to deposit these sheets 2 on the bench 13 in contact with the support plane 14 under the control of the central control unit 12a. More particularly, the head 18 includes a plurality of suction cups 19 of known type arranged in two rows parallel to each other and to the axis of the pins 15 and is coupled to the bench 13 by a drive and guide assembly 20 arranged to move the head 18 itself along a circular path P between an extended pick-up position (Figures 2 and 8) in which, when the carriage 7 is located in its advanced position, the suction cups 19 can couple positively with a sheet 2, and a withdrawn, rest position (Figures 1, 4 and 5) in which the entirety of the head 18 is housed between the support plane 14 and the frame 6 and partially engages an aperture 22 (Figure 8) formed in the bench 13 itself.

More particularly, as illustrated in Figure 8, the assembly 20 includes an articulated parallelogram transmission 23 in turn including two rods 24 and 25 of which the rod 24 has its opposite end portions pivotally connected to the head 18 and to the bench 13 respectively so as to be pivotable about respective axes parallel to the axis of the pins 15. The rod 25 however has one end portion pivotally connected to the head 18 and its opposite end portion connected to the bench 13 by a pivot pin 26 parallel to the pins 15 and also rigidly connected to one end of a lever 27 the opposite end of which is pivotally connected to the output shaft 28 of a linear actuator 29 adapted to pivot the lever 27 and hence the rod 25 about the axis of the pin 26 under the control of the central control unit 12a.

Still with reference to Figure 1, the bench 13 has an associated scoring assembly 30, known per se, which is arranged to score a plurality of score lines (not illustrated) in the sheet 2 located on the plane 14 under the control of the central control unit 12a. More particularly, the assembly 30 includes a bridge member 31 connected to the bench 13 by means of a known guide-slide assembly 32 and in turn including a cross-member which extends parallel to the support plane 14 in a position above the plane 14 itself. The member 31 is movable by means of a motor 32a controlled by the central control unit 12a to move along a line of movement 33 (Figures 6 and 7) perpendicular to the line of movement 11 and supports a motor-driven head 34 which has a scoring tool 35 (Figures 6 and 7) of known type and is coupled to the said cross-member to move on the cross-member itself along a line of movement 36 parallel to the plane 14 and perpendicular to the line of movement 33 under the action of its own motor 36a (Figures 1, 6 and 7) controlled by the central control unit 12a.

The bench 13 is also provided with a plurality of first movable reference projections 37 (Figure 6) which can be moved perpendicular to the plane 14 under the control by the central control unit 12a by respective actuators (known and not illustrated), and with at least one pair of second projections 37a which are movable relative to the plane 14 by respective known actuators, not illustrated, controlled by the central control unit 12a, both perpendicular to the plane 14 and parallel to the line of movement 33 to cooperate with the projections 37 and to position the sheet 2 in a reference or zero position.

The bench 13 also carries a snapping device 38 also of known type which, in the embodiment described, comprises a single snapping bar 39 which, again in the particular embodiment described, is located in a position perpendicular to the line of movement 33 and is moved towards and away from the support plane 14 by a known drive assembly, not illustrated, which is activated automatically by the central control unit 12a or alternatively manually by an operator.

Again with reference to Figure 6, the unit one also includes two or more projections 40 which are carried by the bridge member 31 and are movable towards and away from the support plane 14 by respective actuators (known and not illustrated) controlled by the central control unit 12a. The projections 40 are provided to move the scored sheet 2 on the bench 13 and to position the scores in correspondence with the snapping bar 39.

Alternatively, as illustrated in Figure 7, the unit 1 does not have the projections 40 and the scored sheet 2 is moved on the support plane 14 by a means of a motor-driven belt device 41, also known per se, which is activated and driven under the control of the central control unit 12a.

The operation of the unit 1 will now be described starting from the condition illustrated in Figure 1 in which the carriage 7 is located in its withdrawn position, the bench 13 is located in its lowered, operative position and does not support any sheet 2, the bridge member 31 is arranged in correspondence with one end of the bench 13, the pick-up head 18 is arranged in its withdrawn, rest position and the projections 37, 37a and 40 are arranged in their withdrawn positions, away from the support plane 14.

Starting from this condition, the actuators 16 are activated and pivot the bench 13 about the pins 15 until the bench 13 is brought into its raised, pick-up position while at the same time, the actuator 29 is activated and, through the transmission 23, moves the pick-up head 18 progressively into its extended position. At this point the motors 12 are activated and move the carriage 7 along the line of movement 11 towards the station 3 until the suction cups 19 of the head 8 couple positively with a sheet 2; the actuator 29 is then activated so as to extend the rod 28 and consequently move the head 18 along the path P towards its withdrawn position (Figure 3) and the actuators 16 are activated to return the bench 13 progressively towards its lowered operative position. At the same time as the bench 13 is pivoted towards its lowered position, the projections 37 are advanced by the central control unit 12a so as to define a stop for the sheet 2 and the motors 12 are activated to move the carriage 7 to its withdrawn position. The speed of movement of the head 18 along the path P must be such that, when the bench 13 is in an intermediate position, in which the bench 13 itself is pivoted through a predetermined angle, preferably less than 30°, from its lowered, operative position, the sheet 2 lies substantially in contact with the plane 14 (Figure 4). In this position the suction cups 19 are disengaged from the sheet 2 which, due to the inclination of the bench 13, slides downwardly, under gravity, until it comes into contact with the projections 37. At this point, the projections 37a are actuated, again by the central control unit 12a, to move the sheet into a zero or reference position.

Then, still by means of the actuators 16 controlled by the central control unit 12a, the bench 13 is returned progressively to the said lowered position and, once this has been reached, the motors 32a and 36a are activated and the scoring tool 35 is driven, according to a known criterion for optimising its path, along the sheet 2 so as to form a plurality of score lines (not illustrated) in the sheet 2.

Once this scoring is finished and after the assembly 30 has been returned to its initial position, with the bench 13 still in its lowered position, the central control unit 12a causes the actuation of the projections 40 as well as the movement of the member 31 to move the scored sheet 2 to bring the score lines successively into correspondence with the snapping bar 39. At this point, still by means of the central control unit 12a, the snapping assembly 38 is activated and its bar 39 snaps the sheet 2 along the score lines to form a flat product.

In the variant illustrated in Figure 7, the unit 1 does not have the snapping device 38 but, instead of the device 38, includes a snapping plane 42 of known type, illustrated schematically, which, when the bench 13 is located in its lowered, operative position and the carriage 7 is in its withdrawn, reference position, extends substantially coplanar with and alongside the bench 13 itself.

In use of this latter embodiment, once the sheet 2 has been scored, the assembly 30 is returned to its initial position and then the scored sheet 2 is advanced by means of the device 41 or, alternatively, by means of the projections 40 towards the snapping plane 42 on which the sheet 2 is broken in known manner, along the score lines, to form the flat products.

In both embodiments described above, immediately the support plane 14 has been disengaged by the sheet 2, the actuators 16 and the actuator 29 are again actuated by the control unit 12a and the cycle is repeated following the same steps as those described.

In the further embodiment illustrated in Figures 9 and 10, the guide 10 and the carriage 7 are supported by a further carriage 44 which is coupled to a respective guide 45 adapted to be fixed to a floor 46 and is movable on the guide 45 itself along a line of movement 47 perpendicular to the line 11 under the action of a pair of motors 48 (only one of which is visible in Figure 9), these moving the carriage 44 and hence the bench 39 successively into correspondence with different loading stations 3 aligned on a path parallel to the line of movement 47 (Figure 10).

In use of this latter embodiment, the motors 48 are activated first by the control unit 12a and the carriage 44 is moved along the line of movement 47 until the bench 13 is in a position facing one of the loading stations 3 after which the steps described above are repeated in the same order until the station 3 has been exhausted of sheets 2. Following this exhaustion, a known presence sensor, not illustrated, located, for example, at the said station 3 sends a "store-empty" signal to the central unit 12a which again activates the motors 48 so as to move the carriage 44 to another station 3 and, at this point, the cycle is started again and follows the same steps described above.

As will be clear from the above, the unit 1 described has the advantage over current production lines of being completely automatic, with the added advantage of being extremely small and inexpensive both to manufacture and maintain.

The advantages just explained result essentially from the fact that the carriages 7 and 44 for supporting the bench 13 and its frame 6, by enabling the bench 13 itself to move towards and away from one or more loading stations 3, enable the elimination of pick-up, transfer and loading equipment required in current production lines and which are extremely bulky and particularly essential to pick up the sheets 2 from the loading or deposit station, to transfer the sheets 2 to the scoring bench and to deposit the sheets 2 on the scoring bench itself.

It will also be apparent from the above that the unit 1 described, as well as having the advantages listed above, has the further advantage of being able to replace at least some of the components of current production lines without requiring substantial modification to the productions lines themselves.

Finally it is clear that modifications and variations may be made to the unit 1 described above which are not excluded from the field of protection of the present invention. In particular, the carriages 7 and 44 may, for example, be replaced by wire-guided carriages or alternatively by slides coupled to respective guides each extending along one of the said lines of movement, which need not even be straight.

Furthermore, the pick-up head 18 may have a different number and arrangement of suction cups 19 from those described and may be moved along a path other than a circular path.

Finally the carriage 44 and its guide 45 could lack and the supports 5 for the sheets 2 could be coupled to respective support and drive devices so as to be moved towards and away from the respective station 3.

Again, snapping devices other than the device 38 may be provided.

## Claims

1. A unit (1) for the production of flat glass products, the unit (1) including a support frame (6); a bench (13) for supporting at least one glass sheet (2), the bench (13) being pivotally connected to the frame (6) for pivoting relative to the frame (6) itself about an axis (15); and actuator means (16) interposed between the frame (6) and the bench (13) for rocking the bench (13) about the said axis (15); and being characterized in that it further includes a first carriage (7) for supporting the frame (6), first drive means (12) for moving the first carriage (7) towards and away from a station (3) at which the glass sheet (2) is picked up, and moving and pick-up means (18) carried by the bench (13) for coupling positively with the sheet (2) to take the sheet (2) from the pick-up station (3) and to deposit the sheet (2) on the bench (13).

2. A unit according to Claim 1, characterised in that the bench (13) is connected to the frame (6) for pivoting about the said axis (15) between a lowered, operative position, in which the bench (13) is disposed in a substantially horizontal position, and a raised loading position in which the bench (13) is pivoted from its lowered, operative position through an angle greater than 90° to a position in which it is substantially parallel to the glass sheet (2).

3. A unit according to Claim 1 or Claim 2, characterised in that it includes first guide means (10) for guiding the first carriage (7) towards and away from the pick-up station (3) along a first line of movement (11).

4. A unit according to claim 3, characterised in that it further includes a second carriage (44) and second drive means (48) for moving the second carriage (44); the first guide means (10) being carried by the second carriage (44).

5. A unit according to Claim (4), characterised in that it further includes a second guide means (45) for guiding the second carriage (44) along a second line of movement (47) transverse the first line of movement (11).

6. A unit according to Claim 5, characterised in that the second line of movement (47) is perpendicular to the first line of movement (11) and parallel to the said axis (15).

7. A unit according to Claim 6, characterised in that it includes programmable means (12a) for controlling the first drive means (12) and the second drive means (48).

8. A unit according to any one of the preceding Claims, characterised in that the pick-up and moving means (18) include suction means (19) for coupling positively with the sheet (2) and further drive means (2) for moving the suction means (19) along a curved path (P).

9. A unit according to Claim 8, characterised in that the further drive means (20) include an articulated-parallelogram transmission (23), an actuator (29) interposed between the bench (13) and the articulated-parallelogram transmission (23) and means (12a) for controlling the actuator.

10. A unit according to any one of the preceding claims, characterised in that it includes centring means (37) (37a) for placing the sheet (2) in a reference position relative to the bench (13).

11. A unit according to any one of the preceding Claims, characterised in that it further includes a scoring head (34) associated with the bench (13) and movable relative to the bench (13) itself to form a plurality of score lines on the sheet (2), actuator means (32,32a) for moving the scoring head (34) relative to the bench (13) and means (12a) for controlling the actuator means (32a,36a).

12. A unit according to Claim 11, characterised in that it further includes snapping means (38) carried by the bench (13) for snapping the sheet (2) along at least some of the score lines.

13. A unit according to Claim 12, characterised in that it includes advancement means (40) (41) carried by the bench (13) for displacing the score lines successively into correspondence with the snapping means (38).

14. A unit according to Claim 11, characterised in that it further includes a snapping table (42) associated with the bench (13) and in that transfer means (40) (41) are carried by the bench (13) to advance the scored sheet (2) towards the snapping table (42).
